# EUROPÄISCHE PATENTSCHRIFT

(11) **EP 3 260 358 B1**
(45) Veröffentlichungstag und Bekanntmachung des Hinweises auf die Patenterteilung: **01.04.2020**
(21) Anmeldenummer: 17001052.4
(22) Anmeldetag: 21.06.2017
(51) Int. Cl.: B62D 21/20, B62D 21/14, B60R 19/56

(54) **NUTZFAHRZEUGCHASSIS**
COMMERCIAL VEHICLE CHASSIS
CHÂSSIS DE VÉHICULE UTILITAIRE

(30) Priorität: 24.06.2016 DE 102016007667
(43) Veröffentlichungstag der Anmeldung: 27.12.2017
(73) Patentinhaber: Fahrzeugwerk Bernard Krone GmbH & Co. KG, 49757 Werlte (DE)
(72) Erfinder: Josefowitsch, Ulrich, 01731 Kreischa (DE); Olliges, Stefan, 26897 Hilkenbrook (DE)
(74) Vertreter: Pott, Ulrich

(56) Entgegenhaltungen:
- GB-A- 2 468 031
- GB-A- 2 523 809
- US-A- 4 836 735

## Beschreibung

Die Erfindung bezieht sich auf ein Nutzfahrzeugchassis mit einem Radachsen mit zugeordneten Rädern umfassenden Fahrgestellrahmen mit Längstraversen und Quertraversen, von denen eine den Fahrgestellrahmen heckseitig abschließende Heckquertraverse Teil eines Fahrgestellrahmenhecks ist und die Heckquertraverse und zumindest eine weitere Quertraverse Verriegelungselemente zur Verriegelung einer Nutzlast, insbesondere eines Containers aufweisen wobei das die Heckquertraverse umfassende Fahrgestellrahmenheck als Kompaktheck mit einem mit Abstand unterhalb der Heckquertraverse angeordneten und sich zwischen zwei heckseitigen Rädern und/oder sich zwischen zwei den heckseitigen Rädern zugeordneten Radabdeckungen erstreckenden Mittelbalken ausgebildet ist, wobei die Heckquertraverse zumindest bereichsweise oberhalb von heckseitigen Rädern und/oder von den heckseitigen Rädern zugeordneten Radabdeckungen angeordnet ist, wobei das Kompaktheck mit der Heckquertraverse und dem Mittelbalken in Nutzfahrzeugchassislängsrichtung verschiebbar ausgebildet ist und der Mittelbalken aus seiner Lage zwischen den heckseitigen Rädern bzw. aus seiner Lage zwischen den den heckseitigen Rädern zugeordneten Radabdeckungen zusammen mit der Heckquertraverse aus ihrer Lage zumindest bereichsweise oberhalb von heckseitigen Rädern bzw. den heckseitigen Rädern zugeordneten Radabdeckungen in eine rückversetzte Lage überführbar ist und wobei das Kompaktheck mit der Hecktraverse und dem heckseitigen Mittelbalken Teil eines Kompaktheckausschubes sind.

Beim Transport von Gütern durch Nutzfahrzeuge ist anerkannt, dass die zulässige Nutzlast des Nutzfahrzeuges nicht überschritten werden darf, um die Verkehrs- und Betriebssicherheit nicht zu beeinträchtigen.

Dabei ist die Lastverteilung von besonderer Bedeutung. Gleichwohl bedarf es bei der Beladung des Nutzfahrzeuges nicht ausschließlich der Berücksichtigung der maximalen Nutzlast, sondern auch einer exakten Positionierung der Nutzlast auf der entsprechenden Ladefläche, also dem Nutzfahrzeugchassis mit seinem Fahrgestellrahmen.

Die Positionierung der Nutzlast auf der Ladefläche ist unter anderem abhängig von dem Schwerpunkt der Nutzlast, den zulässigen Achslasten und der sogenannten Sattellast, also der Last, die auf der Sattelkupplung der Zugmaschine liegt. Sowohl für die Sattellast als auch für die Antriebsachslast sind die gesetzlichen Vorschriften einzuhalten.

Für den grenzüberschreitenden Verkehr wird gefordert, dass die Antriebsachsen der Zugmaschine mit nicht weniger als 25 % des Gesamtgewichts des Nutzfahrzeuges belastet sein dürfen. Das kann bei einer ungünstigen Positionierung der Nutzlast zu einer Über- oder Unterschreitung der zulässigen Lasten kommen, obwohl die zulässige Nutzlast nicht überschritten wurde. Eine Achslastüberschreitung kann beispielsweise Schäden an Reifen und Achsen hervorrufen. Achslastunterschreitungen hingegen wirken sich maßgeblich auf das Lenkverhalten oder ein Anfahrverhalten des Nutzfahrzeuges aus.

Im Bereich des Containertransportes ist die Positionierung der Ladung durch Verriegelungspositionen der Verriegelungselemente am Fahrgestell fest vorgegeben.

Es sind verschiedene Nutzfahrzeugchassis für den Containertransport bekannt, um die gesetzlichen Vorschriften für die Lastverteilung speziell für den Transport eines 20'-Containers einzuhalten. Der technische Aufwand der angebotenen Containerfahrgestelle mit entsprechenden Lösungsmöglichkeiten ist jedoch relativ hoch.

So ist beispielsweise ein Nutzfahrzeugchassis für den Containertransport bekannt, das einen Fahrgestellrahmen für eine flexible Lastverteilung ermöglicht. Dabei werden zwei Fahrgestellrahmen ineinander verschoben, um die Position des geladenen Containers zu verändern. Solche Containerfahrgestelle, die einanderzuverschieben sind, werden als Sliding-Bogie-Trailer bezeichnet. Die mittige Transportstellung ermöglicht eine gleichmäßige Verteilung der Last auf die Achsen des Nutzfahrzeugchassis sowie des Nutzfahrzeuges. Zum Be- und Entladen können die Fahrgestellrahmen bei beladenen Containern ineinander verschoben werden, so dass der Container heckbündig an eine Verladerampe herangefahren werden kann.

Darüber hinaus ist ein anderes Nutzfahrzeugchassis bekannt mit einem teleskopierbaren Fahrgestellrahmen. Dabei sind Längstraversen eines vorderen Teils des Fahrgestellrahmens in offene Längstraversen eines hinteren Teils des Fahrgestellrahmens zu teleskopieren. Nach Einnahme der gewählten Teleskopierstellung nach Beladung des Nutzfahrzeugs mit einem Container ist ein Positionswechsel des geladenen Containers allerdings nicht mehr möglich. Wird daher für eine gewählte Transportstellung eine gleichmäßige Lastverteilung auf die Achsen des Fahrgestells und des nutzenden Fahrzeuges realisiert, bei der der geladenen Container einen Abstand zum Fahrgestellrahmenheck aufweist, ist ein Positionswechsel des Containers nach der Verladung nicht mehr möglich. Eine heckbündige Positionierung zur Entladung kann daher nicht mehr eingenommen werden, wenn zuvor der Container für die Transportstellung nicht heckbündig geladen wurde.

Bei beiden Gestaltungen des Nutzfahrzeugchassis der bekannten Arten sind darüber hinaus die gesetzlichen Vorschriften für einen Unterfahrschutz einzuhalten. Deshalb weisen die Heckquertraversen des Fahrgestellrahmenhecks bei beiden bekannten Alternativen der vorbekannten Nutzfahrzeugchassis einen Abstand zu den heckseitigen Rädern des Nutzfahrzeugchassis auf. Dies ist nachteilig und erfordert eine Vielzahl von Bauteilen, die sich auf die Gesamterstehungskosten des Nutzfahrzeugchassis nachteilig auswirken.

Aus der US 4,836,735 A ist ein Nutzfahrzeugchassis der eingangs genannten Art bekannt, bei dem sich hinter den heckseitigen Rädern eine Hecktraverse und ein Mittelbalken erstrecken, wobei die Hecktraverse zumindest bereichsweise oberhalb von heckseitigen Rädern angeordnet ist. Das die Heckquertraverse umfassende Fahrgestellrahmenheck ist als Kompaktheck ausgebildet und zusammen mit dem Mittelbalken in Nutzfahrzeugchassislängsrichtung verschiebbar. Somit ist das Heck mit dem Mittelbalken in eine rückversetzte Lage zu überführen, so dass das Kompaktheck mit der Hecktraverse und dem heckseitigen Mittelbalken Teil eines Kompaktheckausschubes sind.

Mit diesem Nutzfahrzeugchassis gehen viele Vorteile einher, jedoch hat dieses Nachteile hinsichtlich des Unterfahrschutzes.

Aus der GB 2 523 809 A ist ebenfalls ein Nutzfahrzeugchassis mit einem ein- und ausschiebbaren Fahrgestellrahmenheck bekannt, das ähnlich gestaltet ist wie das Nutzfahrzeugchassis nach der US 4,836,735 A.

Es ist Aufgabe der vorliegenden Erfindung, ein Nutzfahrzeugchassis der eingangs genannten Art so zu verbessern, das dessen Flexibilität erhöht ist.

Zur Lösung dieser Aufgabe zeichnet sich das Nutzfahrzeugchassis der eingangs genannten Art dadurch aus, dass an dem Mittelbalken an seiner jeweiligen Nutzfahrzeugchassisaußenseite ein verschwenkbarer oder verschiebbarer Außenbalken vorgesehen ist.

Damit ist ein Nutzfahrzeugchassis geschaffen, bei dem durch die kompakte Bauweise des Fahrgestellrahmenhecks als Kompaktheck die hintere Verriegelungsposition der Nutzlast, insbesondere also des Containers, näher an der letzten Achse der heckseitigen Räder platziert werden kann. Gleichwohl ist das Kompaktheck konstruktiv so zu gestalten, dass eine heckbündige Be- und Entladung eines Containers realisiert werden kann. Aufgrund der engen Platzierung eines Containers an der letzten Achse ist darüber hinaus die Lastverteilung auch bei heckbündiger Be- und Entladungsmöglichkeit des Containers wesentlich verbessert, da der Abstand des Schwerpunktes der Last (Ladung) vom Mittelpunkt des Achsaggregates vergrößert ist, wodurch die Sattellast erhöht wird.

Darüber hinaus ist nur eine geringe Anzahl von Bauteilen notwendig. Daher ist diese erfindungsgemäße Gestaltung des Nutzfahrzeugchassis wesentlich kostengünstiger und weniger verschleißanfällig im Vergleich zu verschiebbaren Fahrgestellen insgesamt. Dieses ist insbesondere im Bereich des Containertransportes von wesentlichem Vorteil, da die Beanspruchung von Containerfahrgestellen bei der Verladung von Containern auf z. B. verschiedene Fahrgestelle sehr hoch ist.

Trotz der Bauweise als Kompaktheck ist es aufgrund des vorgesehenen Mittelbalkens möglich, die gesetzlichen Regelungen für einen Unterfahrschutz einzuhalten, da in Verbindung mit den Mittelbalken die heckseitigen Räder der in Fahrzeuglängsrichtung letzten Achse zum Teil die Funktion des Unterfahrschutzes übernehmen. Um auch ein Unterfahren im Falle eines Unfalles im Bereich zwischen den Rädern zu vermeiden, ist der mit Lageabstand zur Hecktraverse unterhalb der Hecktraverse vorgesehene Mittelbalken vorgesehen.

Das Kompaktheck ist Teil eines Kompaktheckausschubes , das in seiner kürzesten Stellung, also der Stellung, in der die Heckquertraverse in Richtung der anderen Quertraversen des Fahrgestellrahmens verschoben ist, in der Stellung gelegen ist, in der sie sich zumindest bereichsweise oberhalb von heckseitigen Rädern und/oder von der heckseitigen Rädern zugeordneten Radabdeckungen befindet. Gleichwohl kann für den Transport von größeren Containern als 20'-Containern der Kompaktheckausschub dem heckseitigen Mittelbalken soweit hinaus geschoben werden, dass z. B. auch 30'-, 40'-, 45'-Container und andere geladen werden können, die dann auch heckbündig zu entladen und zu beladen sind. Die Fahrgestellrahmenteile sind dazu nicht zu verändern, so dass auf eine Vielzahl von Bauteilen in kostengünstigerer Weise gegenüber herkömmlichen Nutzfahrzeugchassisgestaltungen verzichtet werden kann. Die gesetzlichen Regelungen für den Unterfahrschutz sind dabei auch wiederum von dem Mittelbalken zu übernehmen, der dazu mit ausschwenkbaren Außenbalken versehen ist, die in ihrer ausgeschwenkten Stellung mit Abstand die heckseitigen Räder der letzten Radachse überlappen und mit z. B. Außenblechen zusammenwirken und diese aussteifen. Damit ist die Flexilibität des Nutzfahrzeugchassis wesentlich erhöht.

Weitere vorteilhafte Ausgestaltungen sind weiteren Unteransprüchen, der nachfolgenden Beschreibung und den Zeichnungen zu entnehmen. Die Zeichnung zeigt:
- Fig. 1:: ein Ausführungsbeispiel eines teleskopierbaren Nutzfahrzeugchassis nach der Erfindung mit einem Kompaktheck mit der Hecktraverse, die sich oberhalb der hinteren Räder und oberhalb der hinteren Radabdeckung befindet in eingefahrenem Zustand;
- Fig. 2:: das Nutzfahrzeugchassis nach Fig. 1 mit einem ein- und ausschiebbaren Kompaktheck mit Heckquertraverse und Mittelbalken und ausschwenkbaren Außenbalken im ausgefahrenen Zustand;
- Fig. 3:: ein alternatives Ausführungsbeispiel zu Fig. 1 (nicht teleskopierbar) in einer perspektivischen Aufsicht von hinten;
- Fig. 4:: das Ausführungsbeispiel nach Fig. 3 in einer perspektivischen Aufsicht von vorne;
- Fig. 5:: das Ausführungsbeispiel nach Fig. 3 (teilweise) in einer perspektivischen Ansicht von der Seite;
- Fig. 6:: das Ausführungsbeispiel nach Fig. 3 in einer perspektivischen Ansicht schräg von hinten;
- Fig. 7:: das Ausführungsbeispiel nach Fig. 1 bzw. 2 mit einwärts verschwenkten Außenbalken;
- Fig. 8:: das Ausführungsbeispiel und die Lage des Heckausschubes nach Fig. 7 in einer Seitendarstellung;
- Fig. 9:: das Ausführungsbeispiel nach Fig. 1 bzw. 2 in einer ausgeschobenen Position des Kompakthecks, und
- Fig. 10:: der Kompaktheckausschub des Ausführungsbeispieles nach Fig. 2 in einer Ansicht perspektivisch schräg von unten

In der Zeichnung sind übereinstimmende Teile mit übereinstimmenden Bezugsziffern versehen.

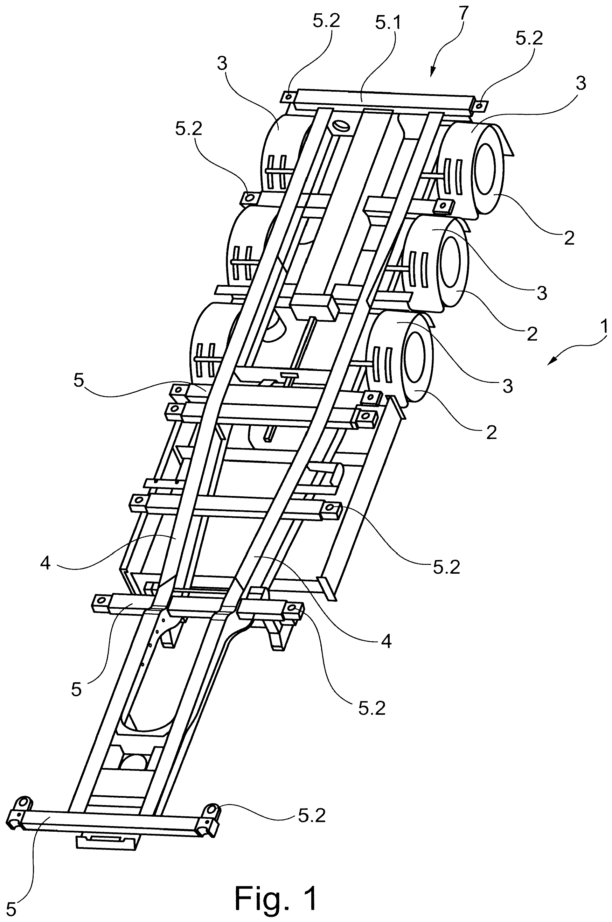

In den Figuren ist allgemein mit 1 ein Nutzfahrzeugchassis beziffert, das in dem gezeigten Ausführungsbeispiel drei Radachsen mit zugeordneten Rädern 2, Radabdeckung 3 und Quertraversen 5 unter Einschluss einer Heckquertraverse 5.1 aufweist. Die Quertraversen 5 unter Einschluss der Heckquertraverse 5.1 weisen Verriegelungselemente 5.2 auf. Das Ausführungsbeispiel des Nutzfahrzeugchassis nach Fig. 1 hat ein Kompaktheck 7, das nicht starr und mithin verschieblich ausgebildet ist. Fig. 1 zeigt, dass dieses Kompaktheck so ausgebildet ist, dass es im eingeschobenen Zustand ganz nah an den heckseitigen Rädern 2 angeordnet ist und sich bereichsweise oberhalb des rückwärtigen Bereiches der heckseitigen Räder 2 bzw. der heckseitigen Radabdeckung 3 befindet.

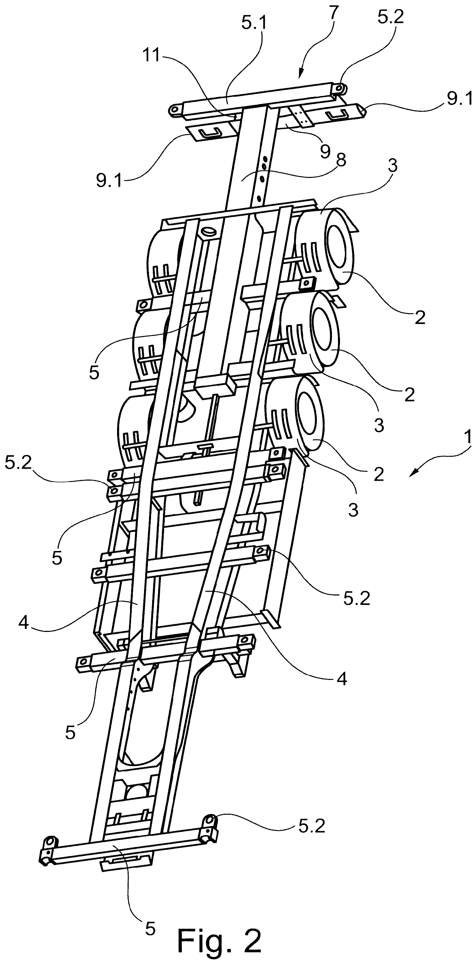

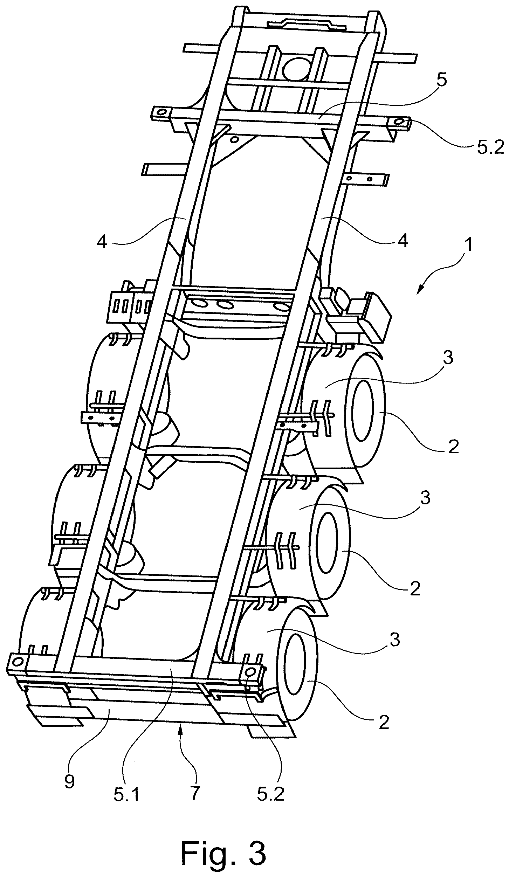

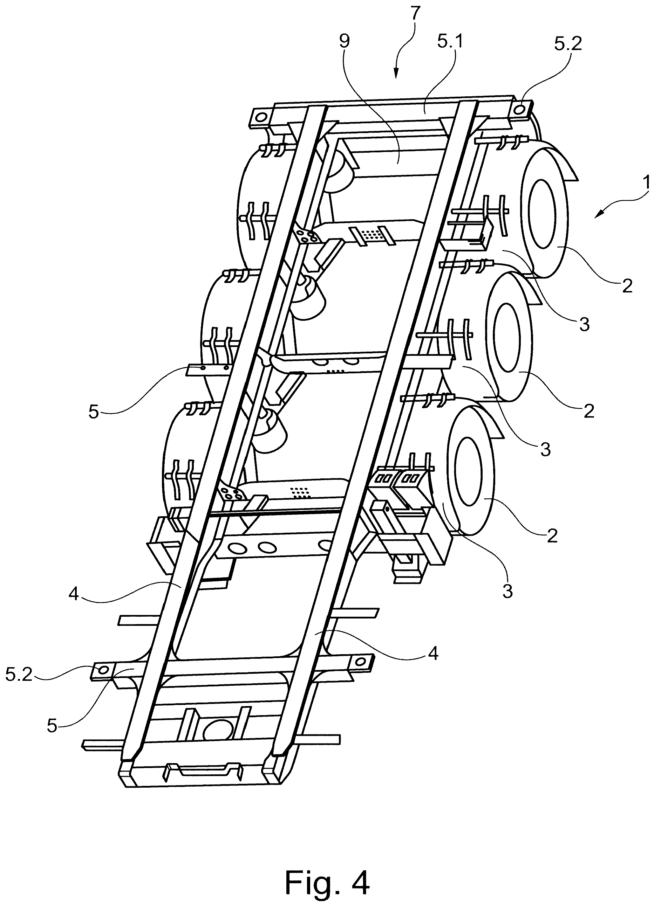

In dem Ausführungsbeispiel nach Fig. 2 ist das Kompaktheck als Kompaktheckausschub mit einem Ein- und Ausschubbalken 8 ausgebildet. Dort ist ersichtlich, dass sich mit Abstand unterhalb der Heckquertraverse 5.1 ein Mittelbalken 9 mit Außenbalken 9.1 befindet, worauf noch näher eingegangen wird. Dieser Mittelbalken 9 erstreckt sich mit Lageabstand unterhalb der Heckquertraverse 5.1 und ist über Konsolen 10 gehalten. Dieser Mittelbalken 9 mit den Außenbalken 9.1 stellt einen Unterfahrschutz dar. Die Fig. 3 und 4 verdeutlichen in verschiedenen Ansichten ein alternatives Ausführungsbeispiel nach Fig. 1.

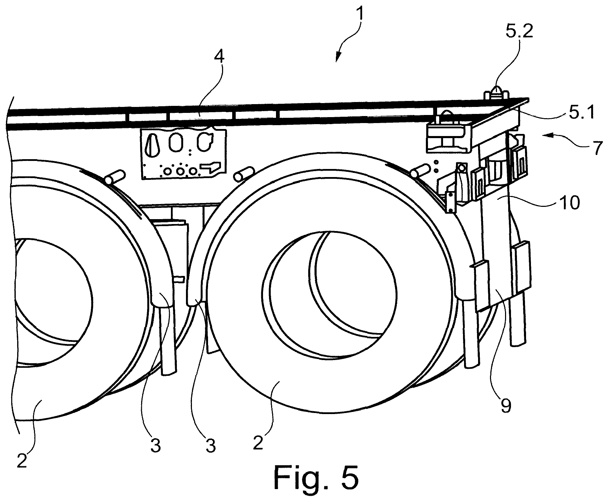

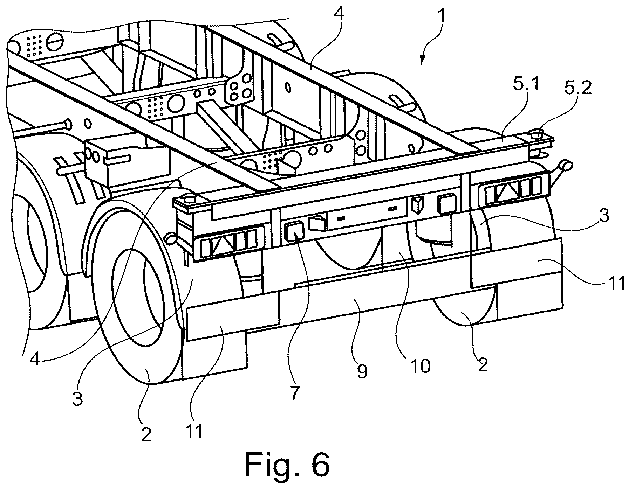

Fig. 5 verdeutlicht, dass sich in dem Ausführungsbeispiel nach Fig. 1 die Heckquertraverse 5.1 oberhalb der heckseitigen Räder 2 bzw. der Radabdeckung 3 befinden, die den heckseitigen Rädern 2 zugeordnet ist. Der Mittelbalken 9 ist so weit im Bereich des Fahrgestellrahmens gelegen, dass sich der Mittelbalken 9 zwischen dem Endbereich der hinteren Räder 2 bzw. der heckseitigen Radabdeckungen 3 befindet. Dieses verdeutlicht auch noch einmal Fig. 6, wo auch Außenbleche 11 gezeigt sind, die sich insgesamt hinter den heckseitigen Rädern 2 bzw. den hinteren Spritzschutzblechen 3 befinden, so dass die hinteren Räder 2 zusammen mit den Außenblechen 11 und dem Mittelbalken 9 den Unterfahrschutz realisieren.

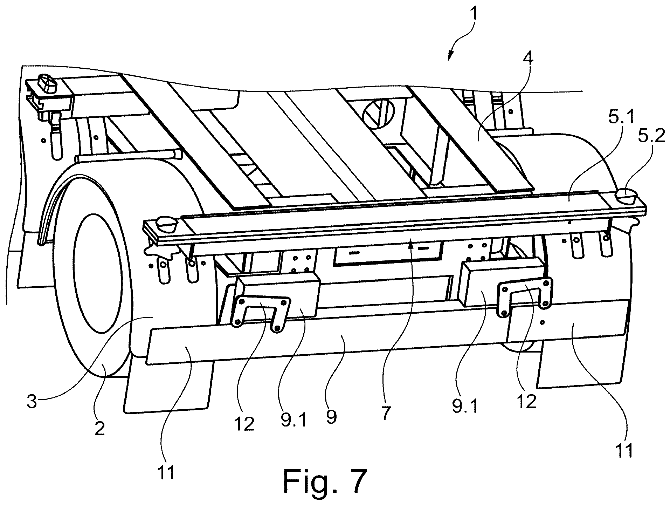

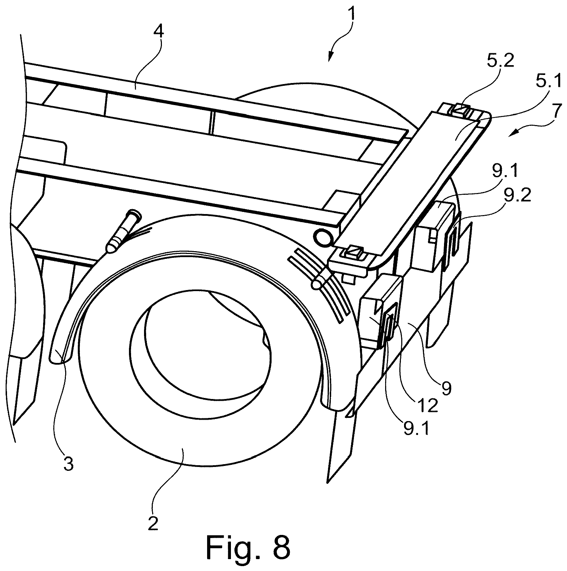

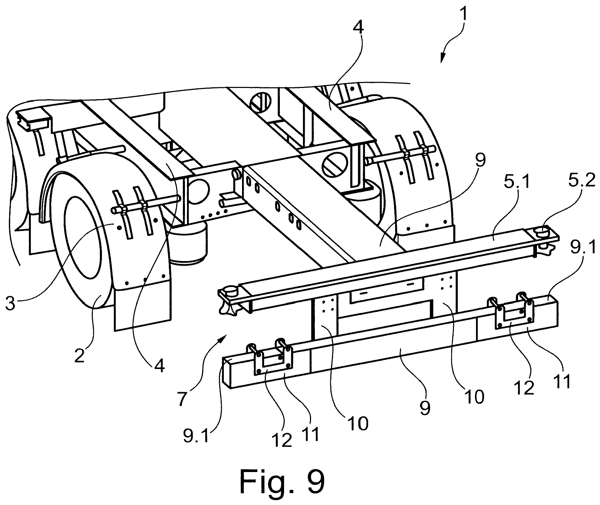

Fig. 7 zeigt die einwärts verschwenkten Außenbalken 9.1 des Mittelbalkens 9 mit den zugeordneten Außenblechen 11. Die Außenbalken 9.1 befinden sich dort in der einwärts verschwenkten Lage oberhalb des Mittelbalkens 9 und sind über die Schwenkhebel 12 nach einwärts bzw. nach auswärts zu verschwenken um eine Schwenkachse, die sich parallel zur Nutzfahrzeugchassislängsachse erstreckt. Gleiches zeigt auch noch einmal Fig. 8 in einer anderen perspektivischen Ansicht. Die Fig. 9 zeigt das Ausführungsbeispiel nach Fig. 2 mit dem ausschiebbaren Kompaktheck 7 und dem Schiebebalken 8.

Das Kompaktheck 7 ist als Kompaktheckausschub ausgebildet, so dass über den Ausschubbalken 8 die Heckquertraverse 5.1 in eine rückversetzte Stellung zu überführen ist, so dass über die Verriegelungselemente 5.2 mit Lageabstand das Heck eines Containeraufbaus zu verriegeln ist, so dass dieser heckbündig zu entladen und zu beladen ist.

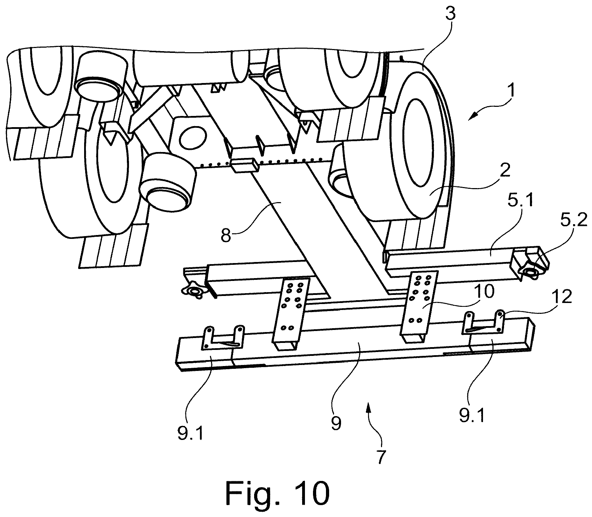

Die Außenbalken 9.1 sind über die Schwenkwinkel 12 in ihre jeweilige auswärts verschwenkte Position überführt worden, so dass sie mit Lageabstand die heckseitigen Räder 2 überlappen und die Außenbleche 11 aussteifen. In dieser Position sind sie zu verriegeln. Die Fig. 9 und Fig. 10 zeigen perspektivisch ausschnittsweise die Positionen der Teile, wie sie in Fig. 2 und 9 dargestellt sind.

## Patentansprüche

1. Nutzfahrzeugchassis (1) mit einem Radachsen mit zugeordneten Rädern (2), umfassenden Fahrgestellrahmen mit Längstraversen (4) und Quertraversen (5, 5.1), von denen eine den Fahrgestellrahmen heckseitig abschließende Heckquertraverse (5.1) Teil eines Fahrgestellrahmenhecks ist und die Heckquertraverse (5.1) und zumindest eine weitere Quertraverse (5) Verriegelungselemente (5.2) zur Verriegelung einer Nutzlast, insbesondere eines Containers, aufweisen, wobei, das die Heckquertraverse (5.1) umfassende Fahrgestellrahmenheck als Kompaktheck (7) mit einem mit Abstand unterhalb der Heckquertraverse (5.1) angeordneten und sich zwischen zwei heckseitigen Rädern (2) und/oder sich zwischen zwei den heckseitigen Rädern (2) zugeordneten Radabdeckungen (3) erstreckenden Mittelbalken (9) ausgebildet ist, wobei die Heckquertraverse (5.1) zumindest bereichsweise oberhalb von heckseitigen Rädern (2) und/oder von den heckseitigen Rädern (2) zugeordneten Radabdeckungen (3) angeordnet ist, wobei das Kompaktheck (7) mit der Heckquertraverse (5.1) und dem Mittelbalken (9) in Nutzfahrzeugchassislängsrichtung verschiebbar ausgebildet ist und der Mittelbalken (9) aus seiner Lage zwischen den heckseitigen Rädern (2) bzw. aus seiner Lage zwischen den den heckseitigen Rädern (2) zugeordneten Radabdeckungen (3) zusammen mit der Heckquertraverse (5.1) aus ihrer Lage zumindest bereichsweise oberhalb von heckseitigen Rädern (2) bzw. den heckseitigen Rädern (2) zugeordneten Radabdeckungen (3) in eine rückversetzte Lage überführbar ist und wobei das Kompaktheck (7) mit der Hecktraverse (5.1) und dem heckseitigen Mittelbalken (9) Teil eines Kompaktheckausschubes sind **dadurch gekennzeichnet, dass** an dem Mittelbalken (9) an seiner jeweiligen Nutzfahrzeugchassisaußenseite ein verschwenkbarer oder verschiebbarer Außenbalken (9.1) vorgesehen ist.

2. Nutzfahrzeugchassis (1) nach Anspruch 1, **dadurch gekennzeichnet, dass** sich an den den Außenseiten des Mittelbalkens (9) Unterfahrschutzsicherungselemente (11) anschließen, die heckseitig die heckseitigen Räder (2) überlappen.

3. Nutzfahrzeugchassis (1) nach Anspruch 2, **dadurch gekennzeichnet, dass** die Unterfahrschutzsicherungselemente (11) als Außenbleche ausgebildet sind.

4. Nutzfahrzeugchassis nach einem der Ansprüche 1 bis 3, **dadurch gekennzeichnet, dass** der Mittelbalken (9) über Konsolen (10) an der Heckquertraverse (5.1) oder an Längstraversen (4) mit vertikalem Lageabstand zu dieser gehaltert ist.

5. Nutzfahrzeugchassis nach Anspruch 1, **dadurch gekennzeichnet, dass** der Außenbalken (9.1) jeweils um eine parallel zur Nutzfahrzeugchassislängsachse parallele Schwenkachse einwärts und auswärts verschwenkbar ist, wobei der jeweilige Außenbalken (9.1) in der einwärts verschwenkten Lage oberhalb des Mittelbalkens (9) angeordnet ist und gemeinsam mit diesem in den eingeschobenen Zustand des Heckausschubs in die Position zwischen die heckseitigen Räder (2) bzw. zwischen die den heckseitigen Rädern (2) zugeordneten Radabdeckungen (3) überführbar ist.

6. Nutzfahrzeugchassis (1) nach Anspruch 1, **dadurch gekennzeichnet, dass** die jeweiligen Außenbalken (9.1) in ihrer auswärts verschwenkten oder ausgeschobenen Lage sich im Bereich des zugeordneten Unterfahrschutzsicherungselements (11) erstreckten und dieses aussteifen.

7. Nutzfahrzeugchassis (1) nach Anspruch 1, **dadurch gekennzeichnet, dass** die Außenbalken (9.1) in ihrer einwärts verschwenkten oder eingeschobenen Lage an dem Mittelbalken (9) verriegelbar sind.

## Claims

1. Commercial vehicle chassis (1) comprising a chassis frame which comprises wheel axles having associated wheels (2), and comprises longitudinal members (4) and transverse members (5, 5.1), of which a rear end transverse member (5.1) which closes the chassis frame at the rear end is part of a chassis frame rear end, and the rear end transverse member (5.1) and at least one further transverse member (5) have locking elements (5.2) for locking a payload, in particular a container, the chassis frame rear end comprising the rear end transverse member (5.1) being designed as a compact rear end (7) having a central beam (9) which is arranged at a distance underneath the rear end transverse member (5.1) and which extends between two rear-end wheels (2) and/or extends between two wheel covers (3) associated with the rear-end wheels (2), the rear end transverse member (5.1) being arranged at least in regions above rear-end wheels (2) and/or above wheel covers (3) associated with the rear-end wheels (2), the compact rear end (7) having the rear end transverse member (5.1) and the central beam (9) being designed so as to be movable in the longitudinal direction of the commercial vehicle chassis and it being possible for the central beam (9) to be transferred from its position between the rear-end wheels (2) or from its position between the wheel covers (3) associated with the rear-end wheels (2) together with the rear end transverse member (5.1) from its position at least in regions above rear-end wheels (2) or wheel covers (3) associated with the rear-end wheels (2) into a set-back position and the compact rear end (7) having the rear end transverse member (5.1) and the rear-end central beam (9) being part of a compact rear end extension, **characterised in that** a pivotable or movable outer beam (9.1) is provided on the central beam (9) on its relevant commercial vehicle chassis outer side.

2. Commercial vehicle chassis (1) according to claim 1, **characterised in that** underrun protection securing elements (11) which overlap the rear-end wheels (2) at the rear end are connected to the outer sides of the central beam (9).

3. Commercial vehicle chassis (1) according to claim 2, **characterised in that** the underrun protection securing elements (11) are designed as outer plates.

4. Commercial vehicle chassis according to any of claims 1 to 3, **characterised in that** the central beam (9) is supported by brackets (10) on the rear end transverse member (5.1) or on longitudinal members (4) at a vertical positional distance therefrom.

5. Commercial vehicle chassis according to claim 1, **characterised in that** the outer beam (9.1) can be pivoted inwardly and outwardly about a parallel pivot axis which is parallel to the longitudinal axis of the commercial vehicle chassis, the relevant outer beam (9.1) being arranged above the central beam (9) in the inwardly pivoted position and it being possible for said outer beam to be transferred together with said central beam into the position between the rear-end wheels (2) or between the wheel covers (3) associated with the rear-end wheels (2) when the rear end extension is inserted.

6. Commercial vehicle chassis (1) according to claim 1, **characterised in that** each of the outer beams (9.1) in their outwardly pivoted or pushed out position extend in the region of the associated underrun protection securing element (11) and reinforce said element.

7. Commercial vehicle chassis (1) according to claim 1, **characterised in that** the outer beams (9.1) in their inwardly pivoted or pushed in position can be locked on the central beam (9).

## Revendications

1. Châssis de véhicule utilitaire (1) avec un cadre de châssis comprenant des essieux de roue avec des roues (2) associées et muni de barres longitudinales (4) et de barres transversales (5, 5.1), parmi lesquelles une barre transversale arrière (5.1) terminant le côté arrière du cadre de châssis fait partie d'un arrière de cadre de châssis et la barre transversale arrière (5.1) et au moins une autre barre transversale (5) présentent des éléments de verrouillage (5.2) destinés au verrouillage d'une charge utile, en particulier d'un conteneur, dans lequel l'arrière de cadre de châssis comprenant la barre transversale arrière (5.1) est réalisé sous la forme d'un arrière compact avec une poutre centrale (9) agencée avec un espacement au-dessous de la barre transversale arrière (5.1) et s'étendant entre deux roues (2) situées du côté arrière et/ou entre deux enjoliveurs (3) associés aux roues (2) situées du côté arrière, dans lequel la barre transversale arrière (5.1) est agencée au moins localement au-dessus des roues (2) situées du côté arrière et/ou d'enjoliveurs (3) associés aux roues (2) situées du côté arrière, dans lequel l'arrière compact (7) est réalisé de manière à pouvoir être déplacé avec la barre transversale arrière (5.1) et la poutre centrale (9) dans la direction longitudinale de châssis de véhicule utilitaire et la poutre centrale (9) peut être transférée à partir de sa position entre les roues arrière (2) ou à partir de sa position entre les enjoliveurs (3) associés aux roues (2) situées du côté arrière jusque dans une position décalée vers l'arrière en même temps que la barre transversale arrière (5.1) à partir de sa position au moins localement au-dessus des roues (2) situées du côté arrière ou des enjoliveurs (3) associés aux roues (2) situées du côté arrière, et dans lequel l'arrière compact (7) avec la barre transversale arrière (5.1) et la poutre centrale (9) située du côté arrière font partie d'une extension d'arrière compact, **caractérisé en ce qu'**une poutre extérieure (9.1) pivotante ou déplaçable est prévue sur la poutre centrale (9) au niveau de son côté extérieur respectif de châssis de véhicule utilitaire.

2. Châssis de véhicule utilitaire (1) selon la revendication 1, **caractérisé en ce que** des éléments de protection anti-encastrement (11) recouvrant du côté arrière les roues (2) situées du côté arrière sont adjacents aux côtés extérieurs de la poutre centrale (9).

3. Châssis de véhicule utilitaire (1) selon la revendication 2, **caractérisé en ce que** les éléments de protection anti-encastrement (11) sont réalisés sous la forme de plaques extérieures.

4. Châssis de véhicule utilitaire selon l'une quelconque des revendications 1 à 3, **caractérisé en ce que** la poutre centrale (9) est maintenue par l'intermédiaire de supports (10) sur la barre transversale arrière (5.1) ou sur des barres longitudinales (4) avec un espacement vertical par rapport auxdites barres.

5. Châssis de véhicule utilitaire selon la revendication 1, **caractérisé en ce que** la poutre extérieure (9.1) peut pivoter vers l'intérieur et vers l'extérieur respectivement autour d'un axe de pivotement parallèle à l'axe longitudinal de châssis de véhicule utilitaire, dans lequel la poutre extérieure (9.1) respective est agencée au-dessus de la poutre centrale (9) dans la position pivotée vers l'intérieur et peut être transférée en même temps que ladite poutre, dans l'état rétracté de l'extension arrière, jusque dans la position entre les roues (2) situées du côté arrière ou entre les enjoliveurs (3) associés aux roues (2) situées du côté arrière.

6. Châssis de véhicule utilitaire (1) selon la revendication 1, **caractérisé en ce que** les poutres extérieures (9.1) respectives, dans leur position pivotée ou étendue vers l'extérieur, s'étendent dans la région de l'élément de protection anti-encastrement (11) associé et le rigidifient.

7. Châssis de véhicule utilitaire (1) selon la revendication 1, **caractérisé en ce que** les poutres extérieures (9.1) peuvent être verrouillées sur la poutre centrale (9) dans leur position pivotée vers l'intérieur ou rétractée.
